(19)

Europäisches
Patentamt

European
Patent Office

Office européen
des brevets

(11) **EP 2 919 537 B1**

(12) **EUROPEAN PATENT SPECIFICATION**

(45) Date of publication and mention
of the grant of the patent:
**17.07.2019 Bulletin 2019/29**

(21) Application number: **13852749.4**

(22) Date of filing: **18.09.2013**

(51) Int Cl.:
***H04W 64/00*** (2009.01)    *G01S 5/02* (2010.01)
*G01S 5/14* (2006.01)

(86) International application number:
**PCT/CN2013/083805**

(87) International publication number:
**WO 2014/071777 (15.05.2014 Gazette 2014/20)**

(54) **METHOD AND SYSTEM FOR POSITIONING MOBILE TERMINAL IN LTE SYSTEM**

VERFAHREN UND SYSTEM ZUR POSITIONIERUNG EINES ENDGERÄTS IN EINEM LTE-SYSTEM

PROCÉDÉ ET SYSTÈME DE POSITIONNEMENT DE TERMINAL MOBILE DANS UN SYSTÈME LTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.11.2012 CN 201210441001**

(43) Date of publication of application:
**16.09.2015 Bulletin 2015/38**

(73) Proprietor: **ZTE Corporation
Shenzhen, Guangdong 518057 (CN)**

(72) Inventors:
• **CAI, Wanjie
Shenzhen
Guangdong 518057 (CN)**
• **XIE, Jianhong
Shenzhen
Guangdong 518057 (CN)**

(74) Representative: **Mozzi, Matteo et al
Jacobacci & Partners S.p.A.
Via Senato, 8
20121 Milano (IT)**

(56) References cited:
**WO-A1-2011/097760     WO-A1-2011/099970
CN-A- 101 959 122     CN-A- 102 265 687
CN-A- 102 573 060     US-A1- 2011 117 926
US-A1- 2011 312 355**

• **ANDREW SOLUTIONS: "Uplink signals for LTE
network based positioning", 3GPP DRAFT;
R1-094485 UPLINK SIGNALLING FOR LTE
NETWORK BASED UE POSITIONING, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Jeju, Korea;
20091109 - 20091113, 2 November 2009
(2009-11-02), XP050597817, [retrieved on
2009-11-02]**

EP 2 919 537 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present invention relates to the field of wireless communications, and in particular to a method and system for positioning a mobile terminal in an LTE system.

## BACKGROUND

With the development of the mobile communication technology, services of a mobile communication system are more and more diverse; a positioning service is an important service in a wireless communication system, and at present, three positioning technologies are mainly used in the third generation wireless communication system (3G): Assisted Global Positioning System (A-GPS), Observed Time Difference of Arrival (OTDOA) and CEllId + RTT.

The A-GPS requires a wireless terminal to be built-in a GPS receiver, and to cooperate a network to complete positioning, and the positioning accuracy is high, but the wireless terminal is required to be able to face three satellites at the same time; the OTDOA completes positioning by measuring distances between the wireless terminal and three NodeBs respectively and using a method of hyperbola positioning, but the method requires the wireless terminal to be able to support OTDOA measurement; the CellId + RTT is an enhancement method of CellId positioning, and completes the positioning on the wireless terminal by determining a distance between a cell where the wireless terminal is located and a NodeB antenna, and the positioning accuracy of the CellId is totally up to the size of the cell, and the positioning accuracy is larger than 500 m, which still cannot satisfy the requirements of most users; however, CellId + RTT makes amendments on this basis, and although the positioning accuracy is improved to a certain extent, the effect is not obvious.

Document US 2011/117926 A1 describes a network-based positioning mechanism and reference signal design in OFDMA systems.

## SUMMARY

In accordance with the present invention, a method and a system, as set forth in the independent claims 1 and 4, respectively, are provided. Additional embodiments of the invention are described in the dependent claims.

Aspects of the present invention are intended to provide a method and system for positioning a mobile terminal in an LTE system, which may perform accurate positioning on the mobile terminal without adding any device and without coordination of the network side.

Aspects of the present invention further provide a system for positioning a mobile terminal in an LTE system, wherein the system comprises a mobile terminal, a serving cell/NodeB and multiple neighbouring cells/NodeBs adjacent to the serving cell/NodeB.

## BRIEF DESCRIPTION OF THE DRAWINGS

Fig. 1 shows a schematic flow chart of a method for positioning a mobile terminal in an LTE system according to an embodiment of the present invention;
Fig. 2 shows a schematic flow chart of a method for positioning a mobile terminal in an LTE system according to another embodiment of the present invention;
Fig. 3 shows a schematic flow chart for positioning a mobile terminal in a method for positioning a mobile terminal in an LTE system according to an embodiment of the present invention;
Fig. 4 shows a structural schematic diagram of a system for positioning a mobile terminal in an LTE system according to an embodiment of the present invention; and
Fig. 5 shows a structural schematic diagram of a serving cell/NodeB in a system for positioning a mobile terminal in an LTE system according to an embodiment of the present invention.

Implementation, functional features and advantages related to the embodiments of the present invention will be illustrated in the subsequent descriptions and appended drawings.

## DETAIL DESCRIPTION OF EMBODIMENTS

It should be understood that specific embodiments described here are only used for illustrating the present invention and not intended to limit the present invention.

The embodiments of the present invention provide a method for positioning a mobile terminal in an LTE system, without adding any device, without coordination of the network side, and the mobile terminal does not need to meet any extra functional requirement. In the method, the mobile terminal is accurately positioned by performing SRS measurement on a cell/NodeB and according to results of the SRS measurement.

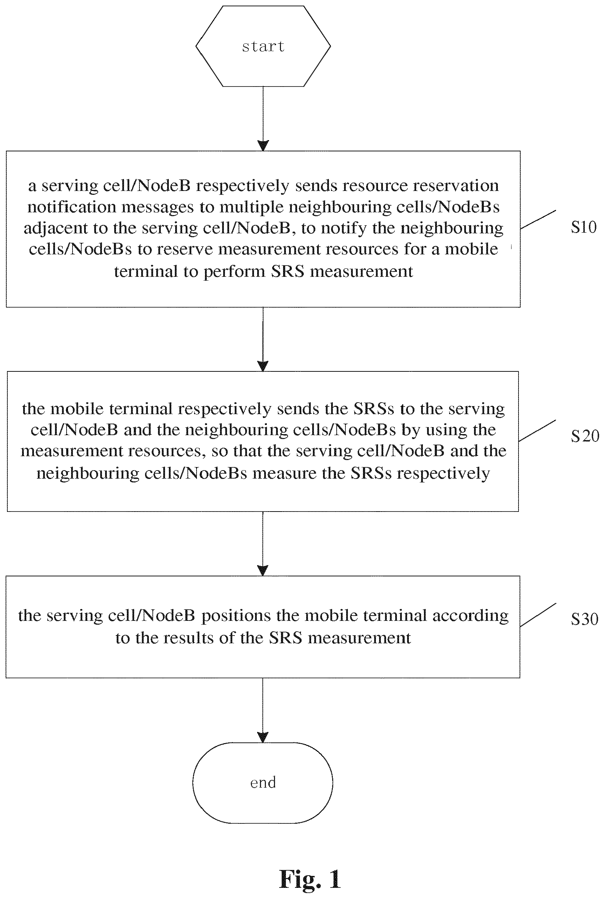

With reference to Fig. 1, Fig. 1 is a schematic flow chart of a method for positioning a mobile terminal in an LTE system according to an embodiment of the present invention.

The embodiment of the present invention provides a method for positioning a mobile terminal in an LTE system, wherein the method comprises the following steps.

Step S10, a serving cell/NodeB respectively sends resource reservation notification messages to multiple neighbouring cells/NodeBs adjacent to the serving cell/NodeB, to notify the neighbouring cells/NodeBs to reserve measurement resources for a mobile terminal to perform SRS measurement;

when the mobile terminal is to be positioned, firstly the serving cell/NodeB to which the mobile terminal belongs is determined, and multiple neighbouring cells/NodeBs adjacent to the serving cell/NodeB are determined, and the resource reservation notification messages are respectively sent to multiple neighbouring cells/NodeBs by the serving cell/NodeB, wherein the resource reservation notification messages are used for notifying the neighbouring cells/NodeBs to reserve measurement resources for the mobile terminal to perform the SRS measurement so that the neighbouring cells/NodeBs may receive the SRSs sent by the mobile terminal on the reserved measurement resources. While the serving cell/NodeB sends the resource reservation notification messages to the multiple neighbouring cells/NodeBs, a sending notification message for notifying the mobile terminal to send the SRS is sent to the mobile terminal.

Step S20, the mobile terminal respectively sends the SRSs to the serving cell/NodeB and the neighbouring cells/NodeBs by using the measurement resources, so that the serving cell/NodeB and the neighbouring cells/NodeBs measure the SRSs respectively; and

after receiving the sending notification messages sent from the serving cell/NodeB, the mobile terminal begins to respectively send the SRSs to the serving cell/NodeB and neighbouring cells/NodeBs. After receiving the SRSs, the serving cell/NodeB and neighbouring cells/NodeBs perform SRS measurement according to the SRSs; after the measurement ends, the neighbouring cells/NodeBs will transfer results of the SRS measurement to the serving cell/NodeB; and in the present embodiment, each of the results of SRS measurement comprises a received signal strength indicator and a timing advance.

Step S30, the serving cell/NodeB positions the mobile terminal according to the results of the SRS measurement.

After the serving cell/NodeB and neighbouring cells/NodeBs respectively complete the SRS measurement, the serving cell/NodeB positions the mobile terminal according to the results of the SRS measurement obtained after the measurement, i.e. according to the received signal strength indicator and the timing advance.

In the embodiment of the present invention, a serving cell/NodeB sends resource reservation notification messages to notify the neighbouring cells/NodeBs to reserve measurement resources for the SRS measurement of the mobile terminal, and meanwhile sends a sending notification message to the mobile terminal for notifying the mobile terminal to send the SRSs; then the mobile terminal sends the SRSs to the serving cell/NodeB and neighbouring cells/NodeBs through measurement resources respectively, so that the serving cell/NodeB and the neighbouring cells/NodeBs perform the SRS measurement; and the serving cell/NodeB positions the mobile terminal according to results of the SRS measurement. By means of the method, the mobile terminal may be accurately positioned without adding any device, without coordination of the network side, and without any additional network device, and the mobile terminal does not need to meet any extra functional requirement.

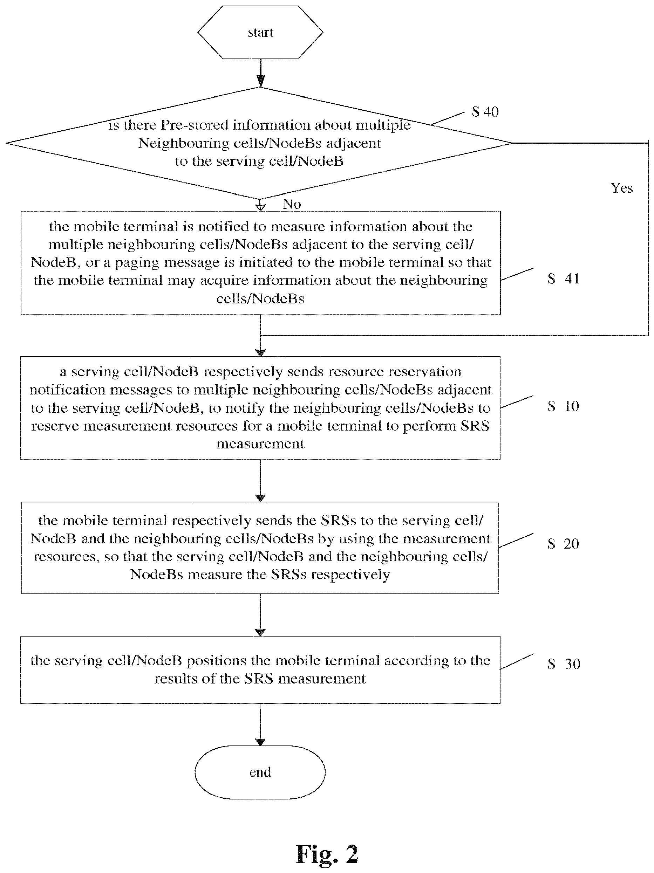

With reference to Fig. 2, Fig. 2 is a schematic flow chart of a method for positioning a mobile terminal in an LTE system according to another embodiment of the present invention.

Based on the above-mentioned embodiment, before executing step S10, the method for positioning the mobile terminal in an LTE system according to the embodiment of the present invention further comprises:

step S40, the serving cell/NodeB judges whether there is pre-stored information about multiple neighbouring cells/NodeBs adjacent to the serving cell/NodeB; if not, perform step S41;

step S41, the mobile terminal is notified to measure information about the multiple neighbouring cells/NodeBs adjacent to the serving cell/NodeB, or a paging message is initiated to the mobile terminal so that the mobile terminal may acquire information about the neighbouring cells/NodeBs.

When a serving cell/NodeB to which the mobile terminal belongs is determined, the serving cell/NodeB judges whether there is pre-stored information about multiple neighbouring cells/NodeBs adjacent to the serving cell/NodeB, wherein the pre-stored information comprises each distance between each of the neighbouring cells/NodeBs and the serving cell/NodeB as well as signal strength of the neighbouring cells/NodeBs. If no, then the serving cell/NodeB may notify the mobile terminal to measure the neighbouring cells/NodeBs, i.e. by measuring each distance between the serving cell/NodeB and each of the neighbouring cells/NodeBs adjacent thereto as well as the signal strength of the neighbouring cells/NodeBs, and the serving cell/NodeB generates a list of neighbouring cells/NodeBs according to the strength of the signals which is obtained from the measured result, and reports the list to the serving cell/NodeB; the serving cell/NodeB also may acquire information about the neighbouring cells/NodeBs adjacent thereto by initiating a paging message to the mobile terminal, and the paging message initiated by the serving cell/NodeB may be transmitted through an uplink channel. After acquiring the information about the neighbouring cells/NodeBs, the serving cell/NodeB stores same so as to select the neighbouring cells/NodeBs according to each distances between the serving cell/NodeB and each of the neighbouring cells/NodeBs as well as the signal strength of the neighbouring cells/NodeBs.

The serving cell/NodeB judges whether there is pre-stored information about multiple neighbouring cells/NodeBs adjacent to the serving cell/NodeB, and notifies the mobile terminal to measure information about the neighbouring cells/NodeBs adjacent to the serving cell/NodeB, or initiates a paging message to the mobile terminal so as to acquire information about the neighbouring cells/NodeBs, and store information about the acquired neighbouring cells/NodeBs. The above solution may facilitate to position the mobile terminal according to information about the neighbouring cells/NodeBs.

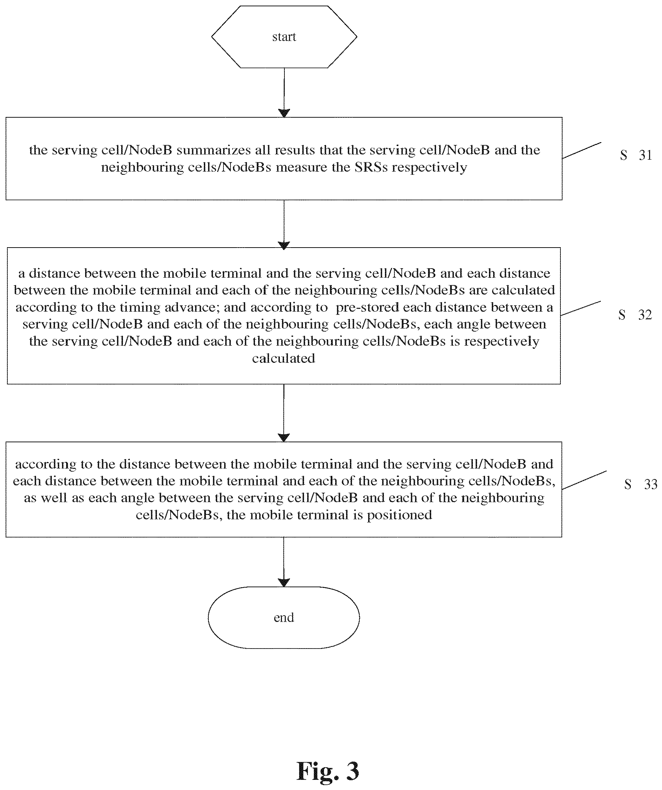

With reference to Fig. 3, Fig. 3 is a schematic flow chart for positioning a mobile terminal in a method for positioning a mobile terminal in an LTE system according to the embodiments of the present invention.

In the above-mentioned embodiment, step S30 comprises:

> step S31, the serving cell/NodeB summarizes all results that the serving cell/NodeB and the neighbouring cells/NodeBs measure the SRSs respectively;
> step S32, a distance between the mobile terminal and the serving cell/NodeB and each distance between the mobile terminal and each of the neighbouring cells/NodeBs are calculated according to the timing advance; and according to pre-stored each distance between a serving cell/NodeB and each of the neighbouring cells/NodeBs, each angle between the serving cell/NodeB and each of the neighbouring cells/NodeBs is respectively calculated; and
> step S33, according to the distance between the mobile terminal and the serving cell/NodeB and each distance between the mobile terminal and each of the neighbouring cells/NodeBs, as well as each angle between the serving cell/NodeB and each of the neighbouring cells/NodeBs, the mobile terminal is positioned.

When the serving cell/NodeB and neighbouring cells/NodeBs perform the SRS measurement, and after the neighbouring cells/NodeBs transfer the results of SRS measurement to the serving cells/NodeBs, the serving cell/NodeB summarizes all the results of SRS measurement each of which comprises the received signal strength indicator and the timing advance.

In the present embodiment, the number of neighbouring cells/NodeBs adjacent to the serving cell/NodeB is preferably 2, which are respectively defined as a first neighbouring cell/NodeB and a second neighbouring cell/NodeB. After the serving cell/NodeB receives the results of SRS measurement, the distance $d_s$ between the mobile terminal and the serving cell/NodeB, the distance $d_{fCell}$ between the mobile terminal and the first neighbouring cell/NodeB and the distance $d_{sCell}$ between the mobile terminal and the second neighbouring cell/NodeB are calculated according to the timing advance in the results of SRS measurement, i.e. calculating through the following formulas:

$$d_s = Ta_s * V,$$

$$d_{fCell} = Ta_{fCell} * V,$$

$$d_{sCell} = Ta_{sCell} * V.$$

The V is a space propagation speed of an electromagnetic wave.

In this way, it may be determined that the mobile terminal is on a circular arc with the serving cell/NodeB being the centre and $d_s$ being the radius, and at the same time, it also may be determined that the mobile terminal is also on a circular arc with the first neighbouring cell/NodeB being the centre and $d_{fCell}$ being the radius, as well as on a circular arc with the second neighbouring cell/NodeB being the centre and $d_{sCell}$ being the radius.

Then, according to each pre-stored distance between a serving cell/NodeB and each of the neighbouring cells/NodeBs, an angle between the serving cell/NodeB and the first neighbouring cell/NodeB and an angle between the serving cell/NodeB and the second neighbouring cell/NodeB are respectively calculated.

That is, according to the distance $L_{s-f}$ between the serving cell/NodeB and the first neighbouring cell/NodeB and the distance $L_{s-s}$ between the serving cell/NodeB and the second neighbouring cell/NodeB, the angle $\theta_{s-s}$ between the serving cell/NodeB and the first neighbouring cell/NodeB and the angle and $\theta_{s-f}$ between the serving cell/NodeB and the second neighbouring cell/NodeB are calculated, i.e. using the cosine law:

$$Cos\,\theta_{s-f} = (L_{s-f}^2 + d_s^2 - d_{fCell}^2)/2L_{s-f}d_s$$

$$Cos\,\theta_{s-s} = (L_{s-s}^2 + d_s^2 - d_{sCell}^2)/2L_{s-s}d_s$$

thus cosine values of two angles $\theta_{s-s}$ and $\theta_{s-f}$ may be obtained, and then respective angles may be calculated by using the arc-cosine function, i.e. the angle $\theta_{s-s}$ between the serving cell/NodeB and the first neighbouring cell/NodeB, as well as the angle $\theta_{s-f}$ between the serving cell/NodeB and the second neighbouring cell/NodeB.

After obtaining the distance between the mobile terminal and serving cell/NodeB and each distance between the mobile terminal and each of the neighbouring cells/NodeBs as well as each angle between the serving cell/NodeB and each of the neighbouring cell/NodeB, the serving cell/NodeB positions the mobile terminal according the above distances and angles, thereby acquiring location information about the mobile terminal, and this may exclude the possibility of mirror images.

The serving cell/NodeB summarizes the results that the serving cell/NodeB and neighbouring cells/NodeBs measure the SRSs respectively; the distance between the mobile terminal and the serving cell/NodeB and each distance between the mobile terminal and each of the neighbouring cells/NodeBs are calculated according to the timing advance; each angle between the serving cell/NodeB and each of the neighbouring cells/NodeBs is calculated; and then according to the distance between the mobile terminal and the serving cell/NodeB and each distance between the mobile terminal and each of the neighbouring cells/NodeBs, as well as each angle between the serving cell/NodeB and each of the neighbouring cells/NodeBs, the mobile terminal is positioned. Thus, the mobile terminal may be accurately positioned without adding any device, without coordination of the network side, and without any additional network device, and the mobile terminal does not need to meet any extra functional requirement.

The embodiments of the present invention further provide a system for positioning a mobile terminal in an LTE system.

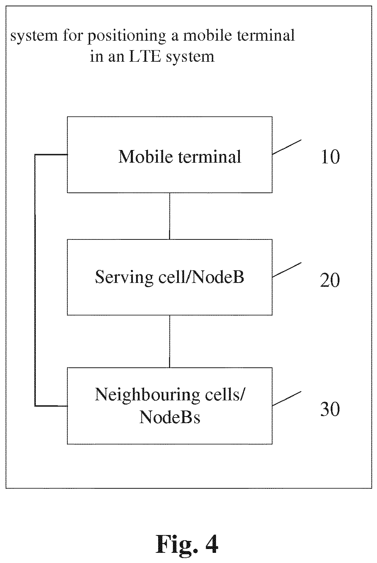

With reference to Fig. 4, Fig. 4 is a structural schematic diagram of a system for positioning a mobile terminal in an LTE system according to an embodiment of the present invention.

The embodiment of the present invention provides a system for positioning a mobile terminal in an LTE system. The system comprises a mobile terminal 10, a serving cell/NodeB 20 and neighbouring cells/NodeBs 30 adjacent to the serving cell/NodeB 20.

The serving cell/NodeB 20 is configured to send respectively resource reservation notification messages to multiple neighbouring cells/NodeBs adjacent to the serving cell/NodeB 20, to notify the neighbouring cells/NodeBs to reserve measurement resources for SRS measurement of a mobile terminal; to perform SRS measurement according to an SRS sent by the mobile terminal; and to position the mobile terminal according to results that the serving cell/NodeB and the multiple neighbouring cells/NodeB respectively measure the SRSs.

The mobile terminal 10 is configured to send the SRSs to the serving cell/NodeB and neighbouring cells/NodeBs through the measurement resources respectively; and

The neighbouring cells/NodeBs 30 is configured to perform the SRS measurement according to the SRSs sent by the mobile terminal.

When the mobile terminal 10 is positioned, firstly a serving cell/NodeB 20 to which the mobile terminal 10 belongs is determined, and multiple neighbouring cells/NodeBs 30 adjacent to the serving cell/NodeB 20 are determined, and the resource reservation notification messages are sent to multiple neighbouring cells/NodeBs 30 through the serving cell/NodeB 20, wherein the resource reservation notification messages are used for notifying the neighbouring cells/NodeBs 30 to reserve measurement resources for the mobile terminal 10 to perform SRS measurement so that the neighbouring cells/NodeBs may receive the SRSs sent by the mobile terminal 10 on the reserved measurement resources respectively. While the serving cell/NodeB 20 sends the resource reservation notification messages to the multiple neighbouring cells/NodeBs 30, a sending notification message for notifying the mobile terminal 10 to send the SRS is sent to the mobile terminal 10.

After receiving the sending notification message sent by the serving cell/NodeB 20, the mobile terminal 10 begins to send the SRSs to the serving cell/NodeB 20 and neighbouring cells/NodeBs 30 respectively. After receiving the SRSs, the serving cell/NodeB 20 and neighbouring cells/NodeBs 30 perform SRS measurement according to the SRSs respectively; after the measurement ends, the neighbouring cells/NodeBs 30 will transfer the results of the SRS measurement to the serving cell/NodeB 20 respectively. In the present embodiment, the result of SRS measurement comprises a received signal strength indicator and a timing advance.

After the serving cell/NodeB 20 and neighbouring cells/NodeBs 30 respectively complete the SRS measurement, the serving cell/NodeB 20 positions the mobile terminal 10 according to the results of the SRS measurement after the measurement, i.e. according to the received signal strength indicator and the timing advance.

In the embodiment of the present invention, the serving cell/NodeB sends resource reservation notification messages to notify the neighbouring cells/NodeBs to reserve measurement resources for SRS measurement of the mobile terminal, and meanwhile sends a sending notification message to the mobile terminal for notifying same to sending the SRSs; then the mobile terminal sends the SRSs to the serving cell/NodeB and neighbouring cells/NodeBs through measurement resources respectively, so that the serving cell/NodeB and the neighbouring cells/NodeBs perform SRS measurement respectively; and the serving cell/NodeB positions the mobile terminal according to the results of the SRS measurement. By means of the method, the mobile terminal may be accurately positioned without adding any device, without coordination of the network side, and without any additional network device, and the mobile terminal does not need to meet any extra functional requirement.

Based on the above-mentioned embodiment, the serving cell/NodeB 20 is further configured to:
judge whether there is pre-stored information about multiple neighbouring cells/NodeBs adjacent to the serving cell/NodeB; if not, then notify the mobile terminal to measure information about neighbouring cells/NodeBs adjacent to the serving cell/NodeB, or initiate a paging message to the mobile terminal so as to acquire information about the neighbouring cells/NodeBs.

When a serving cell/NodeB 20 to which the mobile terminal 10 belongs is determined, the serving cell/NodeB 20 judges whether there is pre-stored information about multiple neighbouring cells/NodeBs 30 adjacent to the serving cell/NodeB 20, wherein the pre-stored information comprises each distance between each of neighbouring cells/NodeBs 30 and the serving cell/NodeB 20 as well as signal strength of the neighbouring cells/NodeBs 30. If not, then the serving cell/NodeB 20 may notify the mobile terminal 10 to perform measurement of the neighbouring cells/NodeBs 30, i.e. by measuring each distance between the serving cell/NodeB 20 and each of the adjacent cells/NodeBs 30 adjacent to the serving cell/NodeB as well as the signal strength of the neighbouring cells/NodeBs 30, and generating a list of neighbouring cells/NodeBs 30 according to the strength of the signals obtained from the results of the measurement, and reporting the list to the serving cell/NodeB 20; the serving cell/NodeB 30 also may acquire information about the neighbouring cells/NodeBs 30 adjacent to the serving cell/NodeB by initiating a paging message to the mobile terminal 10, and the paging message initiated by the serving cell/NodeB 20 may be transmitted through a method, such as an uplink channel. After acquiring the information about the neighbouring cells/NodeBs 30, the serving cell/NodeB 20 stores same so as to select the neighbouring cells/NodeBs 30 according to each distance between the serving cell/NodeB and each of the neighbouring cells/NodeBs 30 as well as the signal strength of the neighbouring cells/NodeBs 30.

The serving cell/NodeB judges whether there is pre-stored information about multiple neighbouring cells/NodeBs adjacent to the serving cell/NodeB, and notifies the mobile terminal to measure information about neighbouring cells/NodeBs adjacent to the serving cell/NodeB, or initiates a paging message to the mobile terminal so as to acquire information about the neighbouring cells/NodeBs, and store information about the acquired neighbouring cells/NodeBs. The above solution may facilitate to position the mobile terminal according to information about the neighbouring cells/NodeBs.

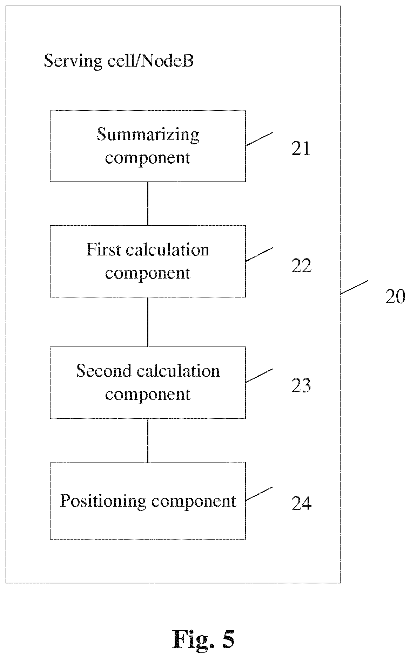

With reference to Fig. 5, Fig. 5 is a structural schematic diagram of a serving cell/NodeB in a system for positioning a mobile terminal in an LTE system according to an embodiment of the present invention.

In the above-mentioned embodiment, the serving cell/NodeB 20 comprises:

a summarizing component 21 configured to summarize results that the serving cell/NodeB and neighbouring cells/NodeBs perform SRS measurement respectively;
a first calculation component 22 configured to acquire a distance between the mobile terminal and the serving cell/NodeB and each distance between the mobile terminal and each of the neighbouring cells/NodeBs according to the timing advance;
a second calculation component 23 configured to respectively calculate each angle between the serving cell/NodeB and each of the neighbouring cells/NodeBs according to each pre-stored distance between a serving cell/NodeB and each of the neighbouring cells/NodeBs; and
a positioning component 24 configured to position the mobile terminal according to the distance between the mobile terminal and the serving cell/NodeB and each distance between the mobile terminal and each of the neighbouring cells/NodeBs, as well as the angle between the serving cell/NodeB and each of the neighbouring cells/NodeBs.

When the serving cell/NodeB 20 and the neighbouring cells/NodeBs 30 perform the SRS measurement respectively, and after the neighbouring cells/NodeBs 30 transfer the results of SRS measurement to the serving cell/NodeB 20 respectively, the serving cell/NodeB 20 summarizes all the results of SRS measurement each of which comprises the received signal strength indicator and the timing advance through a summarization component 21 thereof.

In the present embodiment, the number of neighbouring cells/NodeBs adjacent to the serving cell/NodeB is preferably 2, which are respectively defined as a first neighbouring cell/NodeB and a second neighbouring cell/NodeB. After the serving cell/NodeB receives the result of SRS measurement, the distance $d_s$ between the mobile terminal and the serving cell/NodeB, the distance $d_{fCell}$ between the mobile terminal and the first neighbouring cell/NodeB and the distance $d_{sCell}$ between the mobile terminal and the second neighbouring cell/NodeB are calculated by the first calculation component 22 according to the timing advance in the result of the measurement, i.e. calculating through the following formulas:

$$d_s = Ta_s * V,$$

$$d_{fCell} = Ta_{fCell} * V,$$

$$d_{sCell} = Ta_{sCell} * V.$$

The V is a space propagation speed of an electromagnetic wave.

In this way, it may be determined that the mobile terminal is on a circular arc with the serving cell/NodeB being the centre and $d_s$ being the radius, and at the same time, it also may be determined that the mobile terminal is also on a circular arc with the first neighbouring cell/NodeB being the centre and $d_{fCell}$ being the radius, as well as on a circular arc with the second neighbouring cell/NodeB being the centre and $d_{sCell}$ being the radius.

Then, according to a pre-stored distance between a serving cell/NodeB and each of the neighbouring cells/NodeBs, an angle between the serving cell/NodeB and the first neighbouring cell/NodeB and an angle between the serving cell/NodeB and the second neighbouring cell/NodeB are respectively calculated by the second calculation component 23. That is, according to the distance $L_{s-f}$ between the serving cell/NodeB and the first neighbouring cell/NodeB, the angle $\theta_{s-f}$ between the serving cell/NodeB and the first neighbouring cell/NodeB is calculated, and the angle $\theta_{s-s}$ between the serving cell/NodeB and the second neighbouring cell/NodeB is calculated according to the distance $L_{s-s}$ between the serving cell/NodeB and the second neighbouring cell/NodeB, i.e. using the cosine law:

$$Cos\,\theta_{s-f} = (L_{s-f}^2 + d_s^2 - d_{fCell}^2)/2L_{s-f}d_s$$

$$Cos\,\theta_{s-s} = (L_{s-s}^{\ 2} + d_s^2 - d_{sCell}^2)/2L_{s-s}d_s$$

thus cosine values of two angles $\theta_{s-s}$ and $\theta_{s-f}$ may be obtained, and then respective angle values may be calculated by using the arc-cosine function, i.e. the angle $\theta_{s-s}$ between the serving cell/NodeB and the first neighbouring cell/NodeB, as well as the angle $\theta_{s-f}$ between the serving cell/NodeB and the second neighbouring cell/NodeB.

After obtaining the distance between the mobile terminal and serving cell/NodeB 20, each distance between the mobile terminal and each of the neighbouring cells/NodeBs 30, and each angle between the serving cell/NodeB 20 and each of the neighbouring cell/NodeB 30, the serving cell/NodeB 20 positions the mobile terminal through the positioning component 24 according to the above distances and angles, thereby acquiring location information about the mobile terminal.

The serving cell/NodeB summarizes the results that the serving cell/NodeB and neighbouring cells/NodeBs perform the SRS measurement respectively; the distance between the mobile terminal and the serving cell/NodeB and each distance between the mobile terminal and each of the neighbouring cells/NodeBs are calculated according to the timing advance; each angle between the serving cell/NodeB and each of the neighbouring cells/NodeBs is calculated; and then according to the distance between the mobile terminal and the serving cell/NodeB and each distance between the mobile terminal and each of the neighbouring cells/NodeBs, as well as each angle between the serving cell/NodeB and each of the neighbouring cells/NodeBs, the mobile terminal is positioned. Thus, the mobile terminal may be accurately positioned without adding any device, without coordination of the network side, and without any additional network device, and the mobile terminal does not need to meet any extra functional requirement.

Any equivalent replacements of the structure or the flow based on the contents of the specification and drawings of the present invention, or direct or indirect application of the equivalent replacements in other related technical fields shall fall within the scope of protection of the present invention.

## Industrial Applicability

As stated above, the method and system for positioning a mobile terminal in an LTE system which are provided in the aspects of the present invention have the following beneficial effects: a serving cell/NodeB respectively sends resource reservation notification messages to notify the neighbouring cells/NodeBs to reserve measurement resources for SRS measurement of a mobile terminal, and meanwhile sends a sending notification message to the mobile terminal for notifying the mobile terminal to send the SRSs; then the mobile terminal sends the SRSs to the serving cell/NodeB and neighbouring cells/NodeBs through measurement resources respectively, so that the serving cell/NodeB and the neighbouring cells/NodeBs perform SRS measurement respectively; and the serving cell/NodeB positions the mobile terminal according to results of the SRS measurement. In the embodiments of the present invention, the mobile terminal may be accurately positioned without adding any device, without coordination of the network side, and without any additional network device, and the mobile terminal does not need to meet any extra functional requirement.

## Claims

1. A method for positioning a mobile terminal in an LTE system, comprising:

   a serving cell/NodeB respectively sending (S10) resource reservation notification messages to multiple neighbouring cells/NodeBs adjacent to the serving cell/NodeB, to notify the multiple neighbouring cells/NodeBs to reserve, for a mobile terminal, measurement resources through which the mobile terminal sends Sounding Reference Signals, SRSs;
   the mobile terminal respectively sending (S20) the SRSs to the serving cell/NodeB and the multiple neighbouring cells/NodeBs by using the measurement resources to enable the serving cell/NodeB and the neighbouring cells/NodeBs to perform SRS measurement; and
   the serving cell/NodeB positioning (S30) the mobile terminal according to results of the SRS measurement performed by the serving cell/NodeB and the neighbouring cells/NodeBs respectively;
   wherein the serving cell/NodeB positioning (S30) the mobile terminal according to the results of the SRS measurement performed by the serving cell/NodeB and the neighbouring cells/NodeBs respectively comprises:

the serving cell/NodeB summarizing (S31), after the neighbouring cells/NodeBs transfer the results of the SRS measurement to the serving cell/NodeB, the results of the SRS measurement performed by the serving cell/NodeB and the multiple neighbouring cells/NodeBs respectively;

**characterized by** calculating (S32) a distance between the mobile terminal and the serving cell/NodeB and each distance between the mobile terminal and each of the neighbouring cells/NodeBs based on timing advance comprised in respective results of the SRS measurement performed by the serving cell/NodeB and the multiple neighbouring cells/NodeBs; and according to each pre-stored distance between the serving cell/NodeB and each of the neighbouring cells/NodeBs, respectively calculating (S32) each angle between the serving cell/NodeB and each of the neighbouring cells/NodeBs; and

according to the distance between the mobile terminal and the serving cell/NodeB, each distance between the mobile terminal and each of neighbouring cells/NodeBs, and each angle between the serving cell/NodeB and each of the neighbouring cells/NodeBs, positioning (S33) the mobile terminal.

2. The method according to claim 1, wherein each of the results of the SRS measurement performed by the serving cell/NodeB and the neighbouring cells/NodeBs comprises a received signal strength indicator and a timing advance.

3. The method according to claim 1, wherein before the serving cell/NodeB respectively sends the resource reservation notification messages to the multiple neighbouring cells/NodeBs adjacent to the serving cell/NodeB, the method further comprises:
the serving cell/NodeB judging (S40) whether the serving cell/NodeB pre-stores information about the multiple neighbouring cells/NodeBs adjacent to the serving cell/NodeB; if the serving cell/NodeB does not pre-store the information about the multiple neighbouring cells/NodeBs adjacent to the serving cell/NodeB, then notifying (S41) the mobile terminal to measure the information about the multiple neighbouring cells/NodeBs adjacent to the serving cell/NodeB, or initiating (S41) a paging message to the mobile terminal to acquire the information about the multiple neighbouring cells/NodeBs, wherein the information about the multiple neighbouring cells/NodeBs adjacent to the serving cell/NodeB comprises the each distance between each of the neighbouring cells/NodeBs and the serving cell/NodeB as well as signal strength of the neighbouring cells/NodeBs.

4. A system for positioning a mobile terminal (10) in an LTE system, comprising a mobile terminal (10), a serving cell/NodeB (20) and multiple neighbouring cells/NodeBs (30) adjacent to the serving cell/NodeB (20), wherein

the serving cell/NodeB (20) is configured to respectively send resource reservation notification messages to the multiple neighbouring cells/NodeBs (30) adjacent to the serving cell/NodeB (20), to notify the multiple neighbouring cells/NodeBs (30) to reserve, for a mobile terminal (10), measurement resources through which the mobile terminal (10) sends Sounding Reference Signals, SRSs; to perform SRS measurement according to the SRSs sent by the mobile terminal (10); and to position the mobile terminal (10) according to results of SRS measurement performed by the serving cell/NodeB (20) and the multiple neighbouring cells/NodeBs (30);

the mobile terminal (10) is configured to respectively send the SRSs to the serving cell/NodeB (20) and neighbouring cells/NodeBs (30) through the measurement resources; and

the multiple neighbouring cells/NodeBs (30) is configured to perform SRS measurement according to the SRSs sent by the mobile terminal (10);

wherein the serving cell/NodeB (20) comprises:

a summarizing component configured to summarize, after the neighbouring cells/NodeBs transfer the results of the SRS measurement to the serving cell/NodeB, the results of the SRS measurement performed by the serving cell/NodeB (20) and the multiple neighbouring cells/NodeBs (30) respectively;

**characterized by**

a first calculation component configured to acquire a distance between the mobile terminal (10) and the serving cell/NodeB (20) and each distance between the mobile terminal (10) and the neighbouring cells/NodeBs (30) based on timing advance comprised in respective results of the SRS measurement performed by the serving cell/NodeB and the multiple neighbouring cells/NodeBs;

a second calculation component configured to respectively calculate each angle between the serving cell/NodeB (20) and each of the multiple neighbouring cells/NodeBs (30) according to each pre-stored distance between the serving cell/NodeB (20) and each of the multiple neighbouring cells/NodeBs (30); and

a positioning component configured to, according to the distance between the mobile terminal (10) and the serving cell/NodeB (20), each distance between the mobile terminal (10) and each of the multiple neighbouring cells/NodeBs (30), and each angle between the serving cell/NodeB (20) and each of the neighbouring cells/NodeBs (30), position the mobile terminal (10).

5. The system according to claim 4, wherein each of the results of the SRS measurement performed by the serving cell/NodeB (20) and neighbouring cells/NodeBs (30) comprises a received signal strength indicator and a timing advance.

6. The system according to claim 4, wherein the serving cell/NodeB (20) is further configured to:
judge whether the serving cell/NodeB (20) pre-stores information about the multiple neighbouring cells/NodeBs (30) adjacent to the serving cell/NodeB (20); if the serving cell/NodeB (20) does not pre-store the information about the multiple neighbouring cells/NodeBs (30) adjacent to the serving cell/NodeB (20), then notify the mobile terminal (10) to measure the information about the multiple neighbouring cells/NodeBs (30) adjacent to the serving cell/NodeB (20), or initiate a paging message to the mobile terminal (10) so as to acquire the information about the multiple neighbouring cells/NodeBs (30), wherein the information about the multiple neighbouring cells/NodeBs (30) adjacent to the serving cell/NodeB (20) comprises the each distance between each of the neighbouring cells/NodeBs (30) and the serving cell/NodeB (20) as well as signal strength of the neighbouring cells/NodeBs (30).

**Patentansprüche**

1. Verfahren zum Positionieren eines mobilen Endgeräts in einem LTE-System, umfassend:

durch eine bedienende Zelle/einen bedienenden NodeB Senden (S10) von jeweils Ressourcenreservierungs-Benachrichtigungsmitteilungen an mehrere benachbarte Zellen/NodeBs, die an die bedienende Zelle/den bedienenden NodeB grenzen, um die mehreren benachbarten Zellen/NodeBs zu benachrichtigen, Messressourcen für ein mobiles Endgerät zu reservieren, über die das mobile Endgerät Tonreferenzsignale (Sounding Reference Signals, SRSs) sendet;
durch das mobile Endgerät Senden (S20) der SRSs jeweils an die bediendende Zelle/den bedienenden NodeB und die mehreren benachbarten Zellen/NodeBs, indem die Messressourcen verwendet werden, um die bedienende Zelle/den bedienenden NodeB und die benachbarten Zellen/NodeBs zu aktivieren, eine SRS-Messung durchzuführen; und
durch die bedienende Zelle/den bedienenden NodeB Positionieren (S30) des mobilen Endgeräts gemäß Ergebnissen der jeweils durch die bedienende Zelle/den bedienenden NodeB und die benachbarten Zellen/NodeBs durchgeführten SRS-Messung;
wobei das Positionieren (S30) des mobilen Endgeräts durch die bedienende Zelle/den bedienenden NodeB gemäß den Ergebnissen der jeweils durch die bedienende Zelle/den bedienenden NodeB und die benachbarten Zellen/NodeBs durchgeführten SRS-Messung umfasst:

durch die bedienende Zelle/den bedienenden NodeB Zusammenfassen (S31) der Ergebnisse der jeweils durch die bedienende Zelle/den bedienenden NodeB beziehungsweise die mehreren benachbarten Zellen/NodeBs durchgeführten SRS-Messung, nachdem die benachbarten Zellen/NodeBs die Ergebnisse der SRS-Messung zur bedienenden Zelle/zum bedienenden NodeB übertragen;
**gekennzeichnet durch**
Berechnen (S32) einer Entfernung zwischen dem mobilen Endgerät und der bedienenden Zelle/dem bedienenden NodeB und jeder Entfernung zwischen dem mobilen Endgerät und jeder bzw. jedem der benachbarten Zellen/NodeBs auf der Grundlage eines Zeitvorlaufs, der in jeweiligen Ergebnissen der durch die bedienende Zelle/den bedienenden NodeB und die mehreren benachbarten Zellen/NodeBs durchgeführten SRS-Messung enthalten ist; und gemäß jeder vorab gespeicherten Entfernung zwischen der bedienenden Zelle/den bedienenden NodeB und jeder der benachbarten Zellen/NodeBs jeweils Berechnen (S32) jedes Winkels zwischen der bedienenden Zelle/dem bedienenden NodeB und jeder der benachbarten Zellen/NodeBs; und
Positionieren (S33) des mobilen Endgeräts gemäß der Entfernung zwischen dem mobilen Endgerät und der bedienenden Zelle/dem bedienenden NodeB, jeder Entfernung zwischen dem mobilen Endgerät und jeder der benachbarten Zellen/NodeBs und jedem Winkel zwischen der bedienenden Zelle/dem bedienenden NodeB und jeder der benachbarten Zellen/NodeBs.

2. Verfahren nach Anspruch 1, wobei jedes der Ergebnisse der jeweils durch die bedienende Zelle/den bedienenden NodeB und die benachbarten Zellen/NodeBs durchgeführten SRS-Messung einen Indikator für die Stärke der empfangenen Signale und einen Zeitvorlauf umfasst.

3. Verfahren nach Anspruch 1, wobei, bevor die bedienende Zelle/der bedienende NodeB die Ressourcenreservierungs-Benachrichtigungsmitteilungen an die mehreren benachbarten Zellen/NodeBs sendet, die an die bedienende Zelle/den bedienenden NodeB grenzen, das Verfahren ferner umfasst: durch die bedienende Zelle/den bedienenden NodeB Beurteilen (S40), ob die bedienende Zelle/der bedienende NodeB Informationen über die mehreren benachbarten Zellen/NodeBs vorab speichert, die an die bedienende Zelle/den bedienenden NodeB grenzen; wenn die bedienende Zelle/der bedienende NodeB die Informationen über die mehreren benachbarten Zellen/NodeBs nicht vorab speichert, die an die bedienende Zelle/den bedienenden NodeB grenzen, Benachrichtigen (S41) des mobilen Endgeräts, die Informationen über die mehreren benachbarten Zellen/NodeBs zu messen, die an die bedienende Zelle/den bedienenden NodeB grenzen, oder Auslösen (S41) einer Funkrufnachricht an das mobile Endgerät, die Informationen über die mehreren benachbarten Zellen/NodeBs zu erfassen, wobei die Informationen über die mehreren benachbarten Zellen/NodeBs, die an die bedienende Zelle/den bedienenden NodeB grenzen, die jeweilige Entfernung zwischen jeder der benachbarten Zellen/NodeBs und der bedienenden Zelle/dem bedienenden NodeB sowie die Signalstärke der benachbarten Zellen/NodeBs umfassen.

4. System zum Positionieren eines mobilen Endgeräts (10) in einem LTE-System, umfassend ein mobiles Endgerät (10), eine bedienende Zelle/einen bedienenden NodeB (20) und mehrere benachbarte Zellen/NodeBs (30), die an die bedienende Zelle/den bedienenden NodeB (20) grenzen, wobei

die bedienende Zelle/der bedienende NodeB (20) konfiguriert ist, um jeweils Ressourcenreservierungs-Benachrichtigungsmitteilungen an die mehreren benachbarten Zellen/NodeBs (30) zu senden, die an die bedienende Zelle/den bedienenden NodeB (20) grenzen, um die mehreren benachbarten Zellen/NodeBs (30) zu benachrichtigen, Messressourcen für ein mobiles Endgerät (10) zu reservieren, über die das mobile Endgerät (10) Tonreferenzsignale (SRSs) sendet; um eine SRS-Messung gemäß den durch das mobile Endgerät (10) gesendeten SRSs durchzuführen; und um das mobile Endgerät (10) gemäß den Ergebnissen der SRS-Messung zu positionieren, die durch die bedienende Zelle/den bedienenden NodeB (20) und die mehreren benachbarten Zellen/NodeBs (30) durchgeführt wurden; das mobile Endgerät (10) konfiguriert ist, um die SRSs über die Messressourcen jeweils an die bedienende Zelle/den bedienenden NodeB (20) und die benachbarten Zellen/NodeBs (30) zu senden; und die mehreren benachbarten Zellen/NodeBs (30) konfiguriert sind, um eine SRS-Messung gemäß den durch das mobile Endgerät (10) gesendeten SRSs durchzuführen; wobei die bedienende Zelle/der bedienende NodeB (20) umfasst:

eine Zusammenfassungskomponente, die konfiguriert ist, um die Ergebnisse der jeweils durch die bedienende Zelle/den bedienenden NodeB (20) und die mehreren benachbarten Zellen/NodeBs (30) durchgeführten SRS-Messung zusammenzufassen, nachdem die benachbarten Zellen/NodeBs die Ergebnisse der SRS-Messung zur bedienenden Zelle/zum bedienenden NodeB übertragen;
**gekennzeichnet durch**
eine erste Berechnungskomponente, die konfiguriert ist, um eine Entfernung zwischen dem mobilen Endgerät (10) und der bedienenden Zelle/dem bedienenden NodeB (20) und jede Entfernung zwischen dem mobilen Endgerät (10) und den benachbarten Zellen/NodeBs (30) auf der Grundlage eines Zeitvorlaufs zu erfassen, der in den jeweiligen Ergebnissen der durch die bedienende Zelle/den bedienenden NodeB und die mehreren benachbarten Zellen/NodeBs durchgeführten SRS-Messung enthalten ist; eine zweite Berechnungskomponente, die konfiguriert ist, um jeweils jeden Winkel zwischen der bedienenden Zelle/dem bedienenden NodeB (20) und jeder der mehreren benachbarten Zellen/NodeBs (30) gemäß jeder vorab gespeicherten Entfernung zwischen der bedienenden Zelle/dem bedienenden NodeB (20) und jeder der mehreren benachbarten Zellen/NodeBs (30) zu berechnen; und eine Positionierungskomponente, die konfiguriert ist, um das mobile Endgerät (10) gemäß der Entfernung zwischen dem mobilen Endgerät (10) und der bedienenden Zelle/dem bedienenden NodeB (20), jeder Entfernung zwischen dem mobilen Endgerät (10) und jeder der mehreren benachbarten Zellen/NodeBs (30) und jedem Winkel zwischen der bedienenden Zelle/dem bedienenden NodeB (20) und jeder der benachbarten Zellen/NodeBs (30) zu positionieren.

5. System nach Anspruch 4, wobei jedes der Ergebnisse der durch die bedienende Zelle/den bedienenden NodeB (20) und die mehreren benachbarten Zellen/NodeBs (30) durchgeführten SRS-Messung einen Indikator für die Stärke der empfangenen Signale und einen Zeitvorlauf umfasst.

6. System nach Anspruch 4, wobei die bedienende Zelle/der bedienende NodeB (20) ferner konfiguriert ist, um:

   zu beurteilen, ob die bedienende Zelle/der bedienende NodeB (20) Informationen über die mehreren benachbarten Zellen/NodeBs (30) vorab speichert, die an die bedienende Zelle/den bedienenden NodeB (20) grenzen; wenn die bedienende Zelle/der bedienende NodeB (20) die Informationen über die mehreren benachbarten Zellen NodeBs (30) nicht vorab speichert, die an die bedienende Zelle/den bedienenden NodeB (20) grenzen, das mobile Endgerät (10) zu benachrichtigen, die Informationen über die mehreren benachbarten Zellen/NodeBs (30) zu messen, die an die bedienende Zelle/den bedienenden NodeB (20) grenzen, oder eine Funkrufnachricht an das mobile Endgerät (10) auszulösen, die Informationen über die mehreren benachbarten Zellen/NodeBs (30) zu erfassen, wobei die Informationen über die mehreren benachbarten Zellen/NodeBs (30), die an die bedienende Zelle/den bedienenden NodeB (20) grenzen, die jeweilige Entfernung zwischen jeder der benachbarten Zellen/NodeBs (30) und der bedienenden Zelle/dem bedienenden NodeB (20) sowie die Signalstärke der benachbarten Zellen/NodeBs (30) umfassen.

**Revendications**

1. Procédé de positionnement d'un terminal mobile dans un système à LTE, comprenant :

   une cellule de desserte/un noeud B envoyant respectivement (S10) des messages de notification de réservation de ressources à plusieurs cellules/noeuds B voisins adjacents à la cellule de desserte/au noeud B, afin de notifier aux multiples cellules/noeuds B voisins de réserver, pour un terminal mobile, des ressources de mesure par le biais desquelles le terminal mobile envoie des Signaux de référence de sondage, SRS ;
   le terminal mobile envoyant respectivement (S20) les SRS à la cellule de desserte/au noeud B et aux multiples cellules/noeuds B voisins en utilisant les ressources de mesure pour permettre à la cellule de desserte/au noeud B et aux cellules/noeuds B voisins d'effectuer une mesure de SRS ; et
la cellule de desserte/le noeud B positionnant (S30) le terminal mobile en fonction des résultats de la mesure de SRS effectuée par la cellule de desserte/le noeud B et les cellules/noeuds B voisins respectivement ;
dans lequel la cellule de desserte/le noeud B positionnant (S30) le terminal mobile en fonction des résultats de la mesure de SRS effectuée par la cellule de desserte/le noeud B et les cellules/noeuds B voisins comprend respectivement :

   la cellule de desserte/le noeud B récapitulant (S31), après que les cellules/noeuds B voisins ont transféré les résultats de la mesure de SRS à la cellule de desserte/au noeud B, les résultats de la mesure de SRS effectuée par la cellule de desserte/le noeud B et les multiples cellules/noeuds B voisins respectivement ;
   **caractérisé par**
   le calcul (S32) d'une distance entre le terminal mobile et la cellule de desserte/le noeud B et chaque distance entre le terminal mobile et chacun(e) des cellules/noeuds B voisins sur la base de l'avance de synchronisation comprise dans les résultats respectifs de la mesure de SRS effectuée par la cellule de desserte/le noeud B et les multiples cellules/noeuds B voisins ; et en fonction de chaque distance pré-enregistrée entre la cellule de desserte/le noeud B et chacun(e) des cellules/noeuds B voisins, le calcul (S32) respectif de chaque angle entre la cellule de desserte/le noeud B et chacun(e) des cellules/noeud B voisins ; et en fonction de la distance entre le terminal mobile et la cellule de desserte/le noeud B, chaque distance entre le terminal mobile et chacun(e) des cellules/noeuds B voisins et chaque angle entre la cellule de desserte/le noeud B et chacune des cellules/noeuds B voisins, le positionnement (S33) du terminal mobile.

2. Procédé selon la revendication 1, dans lequel chacun des résultats de la mesure de SRS effectuée par la cellule de desserte/le noeud B et les cellules/noeuds B voisins comprend un indicateur d'intensité de signal reçu et une avance de synchronisation.

**3.** Procédé selon la revendication 1, le procédé comprenant en outre, avant que la cellule de desserte/le noeud B n'envoie respectivement les messages de notification de réservation de ressources aux multiples cellules/noeuds B voisins adjacents à la cellule de desserte/au noeud B, les étapes suivantes : la cellule de desserte/le noeud B détermine (S40) si la cellule de desserte/le noeud B pré-enregistre des informations sur les multiples cellules/noeuds B voisins adjacents à la cellule de desserte/au noeud B ; si la cellule de desserte/le noeud B ne pré-enregistre pas les informations concernant les multiples cellules/noeuds B voisins adjacents à la cellule de desserte/au noeud B, il est alors demandé (S41) au terminal mobile de mesurer les informations concernant les multiples cellules/noeuds B voisins adjacents à la cellule de desserte/au noeud B ou il est envoyé (S41) un message de radiomessagerie au terminal mobile pour acquérir les informations concernant les multiples cellules/noeuds B voisins, les informations sur les multiples cellules/noeuds B voisins adjacents à la cellule de desserte/au noeud B comprenant chaque distance entre chacun(e) des cellules/noeuds B voisins et la cellule de desserte/le noeud B ainsi que l'intensité du signal des cellules/noeuds B voisins.

**4.** Système de positionnement d'un terminal mobile (10) dans un système à LTE, comprenant un terminal mobile (10), une cellule de desserte/un noeud B (20) et plusieurs cellules/noeuds B voisins (30), adjacents à la cellule de desserte/au noeud B (20), dans lequel

la cellule de desserte/le noeud B (20) est configuré(e) pour envoyer respectivement des messages de notification de réservation de ressource aux multiples cellules/noeuds B voisins (30) adjacents à la cellule de desserte/au noeud B (20), pour demander aux multiples cellules/noeuds B voisins (30) de réserver, pour un terminal mobile (10), des ressources de mesure par lesquelles le terminal mobile (10) envoie des Signaux de référence de sondage, SRS ; pour effectuer une mesure de SRS en fonction des SRS envoyés par le terminal mobile (10) ; et pour positionner le terminal mobile (10) en fonction des résultats de la mesure de SRS effectuée par la cellule de desserte/le noeud B (20) et par les multiples cellules/noeuds B (30) voisins ; le terminal mobile (10) est configuré pour envoyer respectivement les SRS à la cellule de desserte/au noeud B (20) et aux cellules/noeuds B voisins (30) via les ressources de mesure ; et les multiples cellules/noeuds B (30) voisins sont configurés pour effectuer une mesure de SRS selon les SRS envoyés par le terminal mobile (10) ;

la cellule de desserte/le noeud B (20) comprenant :

un composant de récapitulation, configuré pour récapituler, après le transfert des résultats de la mesure de SRS par les cellules/noeuds B voisins à la cellule de desserte/au noeud B, les résultats de la mesure de SRS effectuée par la cellule de desserte/le noeud B (20) et les multiples cellules/noeuds B voisins (30) respectivement ; **caractérisé par** un premier composant de calcul, configuré pour acquérir une distance entre le terminal mobile (10) et la cellule de desserte/le noeud B (20) et chaque distance entre le terminal mobile (10) et les cellules/noeuds B voisins (30) en fonction de l'avance de synchronisation comprise dans les résultats respectifs de la mesure de SRS effectuée par la cellule de desserte/le noeud B et les multiples cellules/noeuds B voisins ; un second composant de calcul, configuré pour calculer respectivement chaque angle entre la cellule de desserte/le noeud B (20) et chacun(e) des multiples cellules/noeuds B voisins (30) en fonction de chaque distance pré-enregistrée entre la cellule de desserte/le noeud B (20) et chacun(e) des multiples cellules/noeuds B voisins (30) ; et un composant de positionnement, configuré pour, en fonction de la distance entre le terminal mobile (10) et la cellule de desserte/le noeud B (20), de chaque distance entre le terminal mobile (10) et chacun(e) des multiples cellules/noeuds B voisins (30) et de chaque angle entre la cellule de desserte/le noeud B (20) et chacun(e) des cellules/noeuds B voisins (30), positionner le terminal mobile (10).

**5.** Système selon la revendication 4, dans lequel chacun des résultats de la mesure de SRS effectuée par la cellule de desserte/le noeud B (20) et par les cellules/noeuds B voisins (30) comprend un indicateur d'intensité de signal reçu et une avance de synchronisation.

**6.** Système selon la revendication 4, dans lequel la cellule de desserte/le noeud B (20) est en outre configuré(e) pour : déterminer si la cellule de desserte/le noeud B (20) pré-enregistre des informations sur les multiples cellules/noeuds B voisins (30) adjacents à la cellule de desserte/au noeud B (20) ; si la cellule de desserte/le noeud B (20) ne pré-enregistre pas les informations sur les multiples cellules/noeuds B voisins (30) adjacents à la cellule de desserte/au noeud B (20), demander alors au terminal mobile (10) de mesurer les informations sur les multiples cellules/noeuds B voisins (30) adjacents à la cellule de desserte/au noeud B (20) ou envoyer un message de radiomessagerie au terminal mobile (10) afin d'acquérir les informations concernant les multiples cellules/noeuds B voisins (30), les informations concernant les multiples cellules/noeuds B voisins (30) adjacents à la cellule de desserte/au noeud B (20) comprenant chaque distance entre chacun(e) des cellules/noeuds B voisins (30) et la cellule de desserte/le noeud B (20), ainsi qu'une intensité de signal des cellules/noeuds B (30) voisins.

start

a serving cell/NodeB respectively sends resource reservation notification messages to multiple neighbouring cells/NodeBs adjacent to the serving cell/NodeB, to notify the neighbouring cells/NodeBs to reserve measurement resources for a mobile terminal to perform SRS measurement

S10

the mobile terminal respectively sends the SRSs to the serving cell/NodeB and the neighbouring cells/NodeBs by using the measurement resources, so that the serving cell/NodeB and the neighbouring cells/NodeBs measure the SRSs respectively

S20

the serving cell/NodeB positions the mobile terminal according to the results of the SRS measurement

S30

end

# Fig. 1

Fig. 2

start

the serving cell/NodeB summarizes all results that the serving cell/NodeB and the neighbouring cells/NodeBs measure the SRSs respectively

S 31

a distance between the mobile terminal and the serving cell/NodeB and each distance between the mobile terminal and each of the neighbouring cells/NodeBs are calculated according to the timing advance; and according to pre-stored each distance between a serving cell/NodeB and each of the neighbouring cells/NodeBs, each angle between the serving cell/NodeB and each of the neighbouring cells/NodeBs is respectively calculated

S 32

according to the distance between the mobile terminal and the serving cell/NodeB and each distance between the mobile terminal and each of the neighbouring cells/NodeBs, as well as each angle between the serving cell/NodeB and each of the neighbouring cells/NodeBs, the mobile terminal is positioned

S 33

end

**Fig. 3**

system for positioning a mobile terminal
in an LTE system

Mobile terminal    10

Serving cell/NodeB    20

Neighbouring cells/
NodeBs    30

# Fig. 4

Serving cell/NodeB

Summarizing component — 21

First calculation component — 22

Second calculation component — 23

Positioning component — 24

20

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011117926 A1